# FASCICULE DE BREVET EUROPEEN

(11) **EP 3 281 472 B1**
(45) Date de publication et mention de la délivrance du brevet: **19.02.2020**
(21) Numéro de dépôt: 16733126.3
(22) Date de dépôt: 08.04.2016
(51) Int. Cl.: H04W 72/00, H04W 4/06, H04W 48/10

(54) **PROCÉDÉ D'ÉMISSION DE SIGNAUX DE DIFFUSION DANS UN SYSTÈME DE COMMUNICATION SANS FIL**
VERFAHREN ZUR ÜBERTRAGUNG VON RUNDFUNKSIGNALEN IN EINEM DRAHTLOSKOMMUNIKATIONSSYSTEM
METHOD FOR TRANSMITTING BROADCAST SIGNALS IN A WIRELESS COMMUNICATION SYSTEM

(30) Priorité: 10.04.2015 FR 1553125
(43) Date de publication de la demande: 14.02.2018
(73) Titulaire: SIGFOX, 31670 Labège (FR)
(72) Inventeur: PONSARD, Benoit, 38100 Grenoble (FR); MALLART, Raoul, 75012 Paris (FR); ZIRPHILE, Lionel, 31520 Ramonville Saint Agne (FR)
(74) Mandataire: Ipside
(86) Numéro de dépôt international: PCT/FR2016/050821
(87) Numéro de publication internationale: WO 2016/162649

(56) Documents cités:
- EP-A1- 0 926 905
- EP-A2- 0 977 376
- US-A1- 2010 220 671

## Description

### DOMAINE TECHNIQUE

La présente invention appartient au domaine des systèmes de communication sans fil, et concerne plus particulièrement un procédé d'émission de signaux de diffusion par un groupe de stations de base d'un réseau d'accès à destination de terminaux, ainsi qu'un procédé de réception desdits signaux de diffusion.

### ÉTAT DE LA TECHNIQUE

La présente invention trouve une application particulièrement avantageuse, bien que nullement limitative, dans les systèmes de communication sans fil à bande ultra étroite. Par « bande ultra étroite » (« Ultra Narrow Band » ou UNB dans la littérature anglo-saxonne), on entend que le spectre fréquentiel instantané des signaux radioélectriques émis par les terminaux, à destination du réseau d'accès, est de largeur fréquentielle inférieure à un kilohertz.

De tels systèmes de communication sans fil UNB sont particulièrement adaptés pour des applications du type M2M (acronyme anglo-saxon pour « Machine-to-Machine ») ou du type « Internet des objets » (« Internet of Things » ou IoT dans la littérature anglo-saxonne).

Dans un tel système de communication sans fil UNB, les échanges de données sont essentiellement monodirectionnels, en l'occurrence sur un lien montant entre des terminaux et un réseau d'accès dudit système.

Les terminaux émettent des messages montants qui sont collectés par des stations de base du réseau d'accès, sans avoir à s'associer préalablement à une ou plusieurs stations de base du réseau d'accès. En d'autres termes, les messages montants émis par un terminal ne sont pas destinés à une station de base spécifique du réseau d'accès, et le terminal émet ses messages montants en supposant qu'ils pourront être reçus par au moins une station de base. De telles dispositions sont avantageuses en ce que le terminal n'a pas besoin de réaliser des mesures régulières, gourmandes notamment d'un point de vue consommation électrique, pour déterminer la station de base la plus appropriée pour recevoir ses messages montants. La complexité repose sur le réseau d'accès, qui doit être capable de recevoir des messages montants pouvant être émis à des instants arbitraires et sur des fréquences centrales arbitraires. Chaque station de base du réseau d'accès reçoit des messages montants des différents terminaux qui sont à sa portée.

Un tel mode de fonctionnement, dans lequel les échanges de données sont essentiellement monodirectionnels, est tout à fait satisfaisant pour de nombreuses applications, comme par exemple la télé-relève de compteurs de gaz, d'eau, d'électricité, la télésurveillance de bâtiments ou de maisons, etc.

Dans certaines applications cependant, il peut être avantageux de pouvoir également effectuer des échanges de données dans l'autre direction, à savoir sur un lien descendant du réseau d'accès vers les terminaux.

En particulier, il peut être avantageux d'émettre des signaux de diffusion, globale ou de groupe (respectivement « broadcast » ou « multicast » dans la littérature anglo-saxonne), à destination des terminaux. Notamment, plusieurs bandes fréquentielles peuvent être possibles pour l'émission des messages montants, par exemple associées respectivement à des régions géographiques différentes pouvant être soumises à des contraintes réglementaires différentes. L'émission de signaux de diffusion pourrait alors permettre aux terminaux d'identifier la bande fréquentielle du lien montant dans la région géographique dans laquelle ils se trouvent, et ce avant d'émettre des messages montants dans une bande fréquentielle non prévue à cet effet. Par exemple, il serait possible d'émettre les signaux de diffusion dans la bande fréquentielle du lien montant ou dans une bande fréquentielle présentant un écart fréquentiel prédéfini par rapport à la bande fréquentielle du lien montant.

De tels signaux de diffusion pourraient également être mis en œuvre pour émettre tout type d'information pouvant être utile pour tous les terminaux, ou pour un grand nombre d'entre eux.

Toutefois, pour limiter le coût de fabrication des terminaux, la détection des signaux de diffusion doit pouvoir être réalisée de façon simple et économique d'un point de vue consommation électrique.

En outre, les signaux de diffusion doivent être émis en limitant l'impact sur la collecte des messages montants. Notamment, pour réduire le coût de déploiement du réseau d'accès, il peut être envisagé d'utiliser des stations de base semi-duplex, c'est-à-dire des stations de base qui peuvent recevoir des messages montants et émettre des signaux de diffusion, mais pas simultanément. Dans un tel cas, une station de base qui émet un signal de diffusion n'est plus disponible pour recevoir des messages montants émis par les terminaux, de sorte que des messages montants peuvent être manqués.

Un exemple de l'état de la technique est décrit dans US 2010/220671 A1.

### EXPOSÉ DE L'INVENTION

La présente invention a pour objectif de remédier à tout ou partie des limitations des solutions de l'art antérieur, notamment celles exposées ci-avant.

A cet effet, et selon un premier aspect, l'invention concerne un procédé d'émission de signaux de diffusion par un groupe de stations de base à destination de terminaux d'un système de communication sans fil, chaque station de base comportant une zone de couverture, les zones de couverture desdites stations de base du groupe étant réparties géographiquement de sorte à desservir une zone géographique. En outre, les signaux de diffusion étant de durée limitée et émis dans une même bande fréquentielle utilisée par toutes les stations de base du groupe, les stations de base du groupe sont synchronisées temporellement entre elles et les signaux de diffusion de stations de base différentes du groupe sont multiplexés temporellement. En outre, le système de communication sans fil comporte plusieurs régions géographiques comportant chacune plusieurs groupes de stations de base, et les signaux de diffusion de régions géographiques différentes sont multiplexés temporellement.

Ainsi, un groupe de stations de base desservant une zone géographique utilise la même bande fréquentielle pour émettre les signaux de diffusion. Par conséquent, une fois la bande fréquentielle connue d'un terminal, il lui suffit d'écouter toujours la même bande fréquentielle tant qu'il est dans la même zone géographique, de sorte que l'écoute du lien descendant, qui ne nécessite pas d'écouter successivement plusieurs bandes fréquentielles différentes, est particulièrement simple et économique d'un point de vue consommation électrique.

En outre, les stations de base du groupe sont synchronisées temporellement, et les signaux de diffusion qu'elles émettent sont multiplexés temporellement, c'est-à-dire que lesdits signaux de diffusion des stations de base du groupe sont émis dans des intervalles de temps respectifs distincts. Par conséquent, un terminal n'a pas à gérer l'arrivée simultanée de plusieurs signaux de diffusion, ce qui facilite les traitements nécessaires pour détecter et décoder chaque signal de diffusion.

De plus, à chaque instant, il y a au plus une seule station de base du groupe qui émet un signal de diffusion. Par conséquent, si le groupe comporte N_{G} stations de base, et que celles-ci sont en outre semi-duplex, alors il y a toujours au moins (N_{G} - 1) stations de base qui peuvent être disponibles pour la réception de messages montants. L'impact sur la collecte des messages montants est donc limité si les stations de base sont semi-duplex, et peut encore être réduite si les zones de couverture des stations de base adjacentes du groupe présentent un recouvrement géographique.

Dans des modes particuliers de mise en œuvre, le procédé d'émission peut comporter en outre l'une ou plusieurs des caractéristiques suivantes, prises isolément ou selon toutes les combinaisons techniquement possibles.

Dans des modes particuliers de mise en œuvre, les stations de base du groupe appartiennent à des ensembles respectifs différents, chaque ensemble comportant une pluralité de stations de base appartenant à des groupes respectifs différents desservant des zones géographiques respectives différentes, et les stations de base d'un même ensemble émettent simultanément les signaux de diffusion.

Dans des modes particuliers de mise en œuvre, les signaux de diffusion des stations de base de chaque groupe sont émis selon un motif de multiplexage temporel prédéfini répété de manière récurrente, de sorte que ledit motif de multiplexage temporel est répété simultanément dans les zones géographiques desservies par les différents groupes de stations de base.

Dans des modes particuliers de mise en œuvre, les stations de base sont réparties géographiquement de sorte que les stations de base adjacentes de groupes différents appartiennent à des ensembles différents.

Dans des modes particuliers de mise en œuvre, les stations de base d'ensembles différents sont organisées, dans chaque groupe, selon un même motif de répartition géographique.

Dans des modes particuliers de mise en œuvre, les instants d'émission des signaux de diffusion sont des instants prédéfinis en échelle de temps universel coordonné UTC.

Dans des modes particuliers de mise en œuvre, les signaux de diffusion émis par le groupe de stations de base présentent un recouvrement fréquentiel.

Dans des modes particuliers de mise en œuvre, les zones de couverture de stations de base adjacentes du groupe présentent un recouvrement géographique.

Dans des modes particuliers de mise en œuvre, les signaux de diffusion de régions géographiques différentes sont regroupés temporellement.

Dans des modes particuliers de mise en œuvre, les signaux de diffusion des stations de base du groupe sont émis selon un motif de multiplexage temporel prédéfini répété selon un motif de répétition prédéfini, et les signaux de diffusion des stations de base comportent des identifiants permettant de distinguer lesdits signaux de diffusion au sein du motif de multiplexage temporel.

De telles dispositions sont avantageuses en ce que chaque terminal, lorsqu'il a détecté un signal de diffusion, peut alors estimer un instant théorique de début d'un motif de multiplexage temporel ultérieur. Par exemple, si un terminal se déplace dans la zone géographique, il peut déterminer à partir de quel instant il doit écouter le lien descendant pour être en mesure de recevoir le premier signal de diffusion du motif de multiplexage temporel, émis par l'une des stations de base du groupe. Ceci est également valable, si le terminal passe d'une zone géographique à une autre, lorsque les stations de base sont organisées en ensembles et que les stations de base d'un même ensemble émettent simultanément leurs signaux de diffusion.

Dans des modes particuliers de mise en œuvre, les signaux de diffusion comportent en outre des informations permettant de distinguer les motifs de multiplexage temporel au sein du motif de répétition.

Dans des modes particuliers de mise en œuvre, la durée du motif de multiplexage temporel est au moins dix fois inférieure à la durée minimale entre deux répétitions du motif de multiplexage temporel.

Selon un second aspect, la présente invention concerne un réseau d'accès d'un système de communication sans fil, comportant des stations de base comportant des moyens configurés pour émettre des signaux de diffusion, à destination de terminaux, selon un procédé d'émission selon l'un quelconque des modes de mise en œuvre de l'invention.

Dans des modes préférés de réalisation, tout ou partie des stations de base du réseau d'accès sont de type semi-duplex.

Selon un troisième aspect, la présente invention concerne un procédé de réception, par un terminal, de signaux de diffusion émis selon un procédé d'émission selon l'un quelconque des modes de mise en œuvre de l'invention. Plus particulièrement, ledit procédé de réception comporte la synchronisation temporelle initiale du terminal avec un réseau d'accès du système de communication sans fil, l'estimation d'un instant théorique de début d'un motif de multiplexage temporel ultérieur et la recherche de signaux de diffusion en fonction dudit instant théorique de début. Lorsqu'un signal de diffusion est détecté, ledit procédé de réception comporte :
- la mesure d'un instant de réception dudit signal de diffusion détecté,
- l'extraction de l'identifiant dudit signal de diffusion détecté,
- le recalage temporel du terminal avec le réseau d'accès en fonction de l'identifiant extrait, du motif de multiplexage temporel, de l'instant de réception mesuré et de l'instant théorique de début du motif de multiplexage temporel détecté.

Selon un quatrième aspect, la présente invention concerne un terminal comportant des moyens configurés pour mettre en œuvre un procédé de réception de signaux de diffusion selon l'un quelconque des modes de mise en œuvre de l'invention.

L'invention est définie par les revendications annexées.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un système de communication sans fil,
- Figure 2 : un exemple de répartition géographique de stations de base dans une zone géographique,
- Figure 3 : un diagramme illustrant les principales étapes d'un procédé d'émission de signaux de diffusion par un groupe de stations de base,
- Figure 4 : des diagrammes temporels illustrant un mode préféré de mise en œuvre, dans lequel les signaux de diffusion des stations de base d'un groupe sont émis selon un motif de multiplexage temporel prédéfini,
- Figure 5 : un exemple de répartition géographique de groupes de stations de base dans une région géographique,
- Figure 6 : un diagramme illustrant les principales étapes d'un procédé de réception de signaux de diffusion par un terminal.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

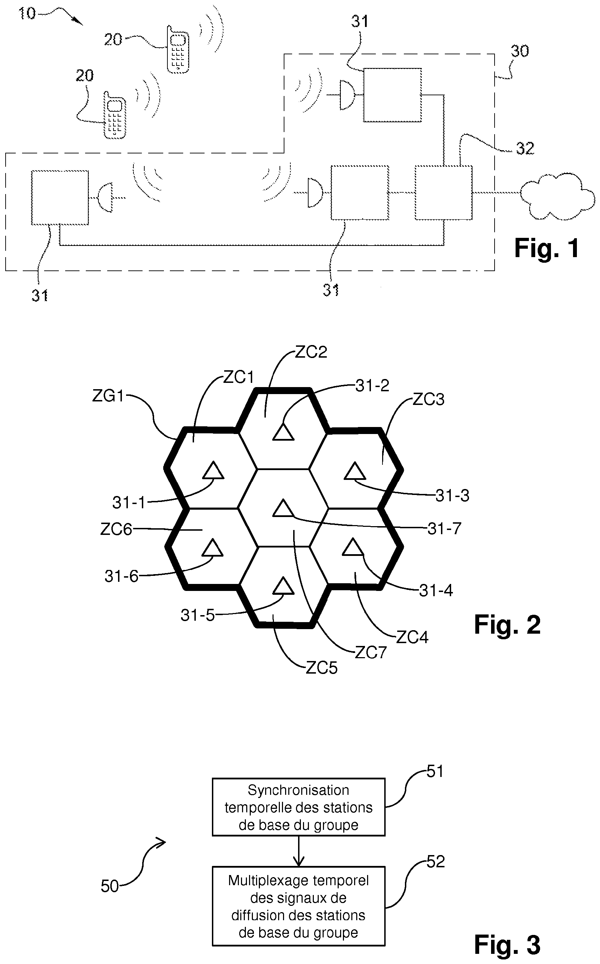

La figure 1 représente schématiquement un système 10 de communication sans fil, par exemple de type UNB, comportant plusieurs terminaux 20 et un réseau d'accès 30 comportant plusieurs stations de base 31.

Les terminaux 20 et les stations de base 31 du réseau d'accès 30 échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Les terminaux 20 sont adaptés à émettre des messages montants sur un lien montant à destination du réseau d'accès 30.

Chaque station de base 31 est adaptée à recevoir les messages montants des terminaux 20 qui se trouvent à sa portée. Chaque message montant ainsi reçu est par exemple transmis à un serveur 32 du réseau d'accès 30, éventuellement accompagné d'autres informations comme un identifiant de la station de base 31 qui l'a reçu, la puissance mesurée dudit message montant reçu, la date de réception et/ou la fréquence centrale mesurée dudit message montant reçu, etc. Le serveur 32 traite par exemple l'ensemble des messages montants reçus des différentes stations de base 31.

En outre, le réseau d'accès 30 est également adapté à émettre, par l'intermédiaire des stations de base 31, des signaux de diffusion sur un lien descendant à destination des terminaux 20, lesquels sont adaptés à les recevoir. Les signaux de diffusion peuvent être des signaux de diffusion globale (« broadcast » dans la littérature anglo-saxonne) et/ou des signaux de diffusion de groupe (« multicast » dans la littérature anglo-saxonne).

De manière conventionnelle, une station de base 31 comporte une zone de couverture telle que, pour des terminaux 20 se trouvant dans ladite zone de couverture, les messages montants émis par ces terminaux 20 sont susceptibles d'être détectés par ladite station de base 31, et les signaux de diffusion émis par ladite station de base 31 sont susceptibles d'être reçus par ces terminaux. Il est à noter que la zone de couverture d'une station de base 31 n'est pas nécessairement la même pour le lien montant et pour le lien descendant. Dans la suite de la description, on se place de manière non limitative dans le cas où la zone de couverture sur le lien montant et la zone de couverture sur le lien descendant sont identiques.

De manière conventionnelle, les stations de base 31 du réseau d'accès 30 sont réparties géographiquement de sorte à pouvoir desservir un grand nombre de terminaux 20.

La figure 2 représente schématiquement un groupe de N_{G} stations de base 31, situées dans des sites géographiques différents, dont les zones de couverture desservent ensemble une zone géographique ZG1. Dans l'exemple non limitatif illustré par la figure 2, le nombre N_{G} de stations de base 31 du groupe est égal à 7, et lesdites N_{G} stations de base 31 du groupe sont désignées respectivement par 31-1 à 31-7 lorsqu'elles doivent être distinguées, et leurs zones de couverture sont désignées respectivement par ZC1 à ZC7.

Dans l'exemple illustré par la figure 2, les zones de couverture ZC1 à ZC7 sont représentées schématiquement comme ne présentant pas de recouvrement géographique entre elles. Toutefois, de préférence, les zones de couverture de stations de base adjacentes du groupe présentent un recouvrement géographique entre elles. Ainsi, un terminal 20 est susceptible, dans les zones de recouvrement géographique, de recevoir des signaux de diffusion émis par des stations de base 31 différentes, ce qui permet en principe de réduire le temps d'écoute nécessaire pour détecter au moins un signal de diffusion. En outre, des messages montants émis par un terminal 20 sont susceptibles d'être reçus par plusieurs stations de base 31, ce qui est avantageux notamment dans le cas de stations de base semi-duplex, qui ne sont pas disponibles en réception lorsqu'elles émettent un signal de diffusion sur le lien descendant, mais également pour améliorer le bilan de liaison en exploitant une plus grande diversité spatiale. De préférence, le recouvrement géographique entre zones de couverture de stations de base 31 adjacentes est tel que, en chaque position à l'intérieur de la zone géographique ZG1, un message montant émis par un terminal 20 est susceptible d'être reçu par au moins deux stations de base 31 et/ou ledit terminal 20 est susceptible de recevoir des signaux de diffusion émis par au moins deux stations de base 31.

La présente invention concerne notamment un procédé 50 d'émission de signaux de diffusion par un groupe de stations de base 31, tel qu'illustré par la figure 2, ainsi qu'un procédé 60 de réception de ces signaux de diffusion par les terminaux 20, qui sont décrits en détail ci-après.

### A) Procédé d'émission de signaux de diffusion

Le procédé 50 d'émission de signaux de diffusion est mis en œuvre par le réseau d'accès 30 du système 10 de communication sans fil UNB.

Dans la suite de la description, on se place dans le cas où ledit procédé 50 d'émission de signaux de diffusion est mis en œuvre principalement par les stations de base 31 dudit réseau d'accès 30. Les stations de base 31 comportent par exemple, à cet effet, des modules de traitement respectifs (non représentés sur les figures), chaque module de traitement comportant par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé 50 d'émission de signaux de diffusion. Dans une variante, chaque module de traitement comporte un ou des circuits logiques programmables, de type FPGA, PLD, etc., et/ou circuits intégrés spécialisés (ASIC) adaptés à mettre en œuvre tout ou partie desdites étapes du procédé 50 d'émission de signaux de diffusion.

Chaque station de base 31 comporte en outre des moyens de communication sans fil, considérés comme connus de l'homme de l'art, permettant à ladite station de base de recevoir des messages montants et d'émettre des signaux de diffusion sous la forme de signaux radioélectriques.

En d'autres termes, les stations de base 31 du réseau d'accès 30 comportent des moyens respectifs configurés de façon logicielle (produit programme d'ordinateur spécifique) et/ou matérielle (FPGA, PLD, ASIC, etc.) pour mettre en œuvre les différentes étapes du procédé 50 d'émission de signaux de diffusion.

Les signaux de diffusion émis par les stations de base 31 sont de durée limitée, par exemple comprise entre quelques centaines de millisecondes et quelques secondes. En outre, selon l'invention, les stations de base 31 du groupe émettent les signaux de diffusion dans une même bande fréquentielle, qui est donc partagée par lesdites stations de base du groupe.

Dans la suite de la description, on se place de manière non limitative dans le cas d'une bande fréquentielle de largeur 200 kilohertz. La bande fréquentielle dans laquelle les stations de base 31 du groupe émettent les signaux de diffusion peut être identique à la bande fréquentielle du lien montant, dans laquelle les terminaux 20 émettent les messages montants, ou une bande fréquentielle présentant un écart fréquentiel prédéfini par rapport à ladite bande fréquentielle du lien montant, etc.

Il est à noter que, si les messages montants émis par les terminaux 20 sont à bande ultra étroite dans un système de communication sans fil UNB, les signaux de diffusion, eux, ne sont pas nécessairement à bande ultra étroite et peuvent avoir une largeur spectrale instantanée supérieure à un kilohertz. Dans la suite de la description, on se place de manière non limitative dans le cas où les signaux de diffusion sont également à bande ultra étroite, qui correspond à un mode préféré de mise en œuvre de l'invention.

La figure 3 représente schématiquement les principales étapes d'un procédé 50 d'émission de signaux de diffusion, lesquelles sont :
- 51 synchronisation temporelle des stations de base 31-1 à 31-7 du groupe,
- 52 émission des signaux de diffusion par les différentes stations de base 31-1 à 31-7 du groupe, les signaux de diffusion émis par des stations de base différentes étant multiplexés temporellement.

Ainsi, et selon l'invention, les signaux de diffusion des différentes stations de base 31-1 à 31-7 du groupe, qui sont émis dans la même bande fréquentielle, sont en outre multiplexés temporellement.

A cet effet, les stations de base 31-1 à 31-7 du groupe sont préalablement synchronisées temporellement, pour assurer que lesdits signaux de diffusion puissent être émis successivement sans recouvrement temporel entre eux. Toute méthode de synchronisation temporelle des stations de base 31-1 à 31-7 du groupe entre elles peut être mise en œuvre, et le choix d'une méthode particulière ne constitue qu'une variante d'implémentation de l'invention. En outre, il est à noter que la précision de la synchronisation temporelle entre les stations de base 31 peut être relativement faible. Par exemple une précision de l'ordre de la seconde est considérée comme suffisante dans le contexte de l'invention, en prévoyant par exemple des intervalles temporels de garde entre les émissions de signaux de diffusion successifs, pour éviter que ceux-ci ne se chevauchent dans le temps.

Etant donné que les signaux de diffusion sont multiplexés temporellement, ceux-ci sont de préférence émis proches les uns des autres dans le domaine fréquentiel, afin de limiter la largeur de la bande fréquentielle d'écoute de chaque terminal 20, qui peut éventuellement, le cas échéant, être inférieure à 200 kilohertz. Par exemple, les signaux de diffusion émis par le groupe de stations de base 31-1 à 31-7 peuvent présenter un recouvrement fréquentiel. Le recouvrement fréquentiel peut n'être que partiel. Toutefois, les signaux de diffusion sont de préférence émis sur une même fréquence centrale, de sorte que le recouvrement fréquentiel est intégral, c'est-à-dire qu'ils sont sensiblement superposés dans le domaine fréquentiel. Ainsi, chaque terminal 20, s'il connaît la fréquence centrale sur laquelle sont émis lesdits signaux de diffusion, peut alors écouter le lien descendant avec une bande fréquentielle d'écoute de largeur réduite, de l'ordre de la largeur spectrale instantanée des signaux de diffusion.

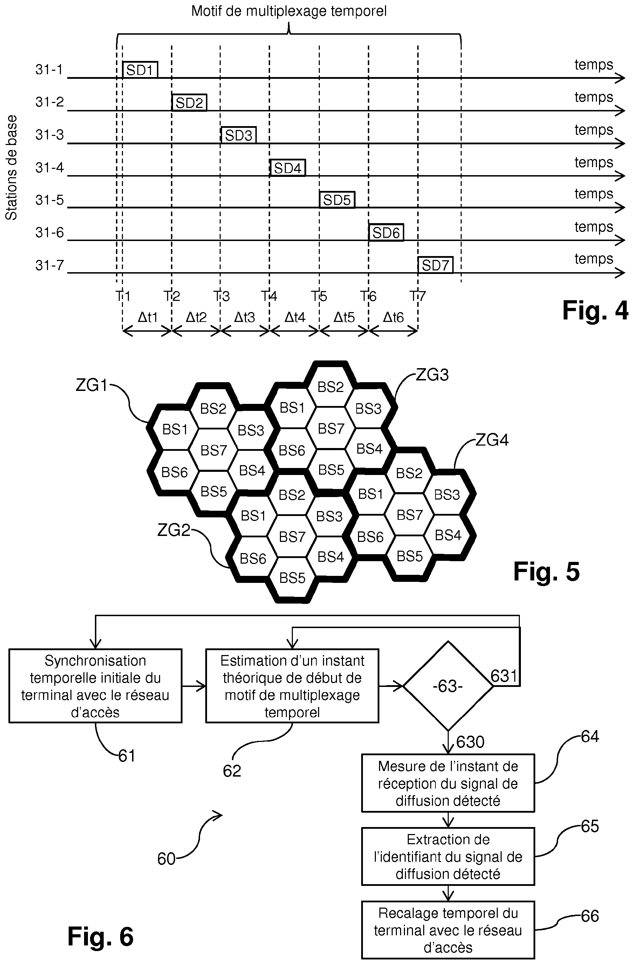

La figure 4 représente schématiquement des diagrammes temporels illustrant un exemple non limitatif dans lequel les signaux de diffusion des stations de base 31-1 à 31-7 du groupe sont émis selon un motif de multiplexage temporel prédéfini.

Par « motif de multiplexage temporel prédéfini », on entend que lesdits signaux de diffusion desdites stations de base 31-1 à 31-7 du groupe sont émis selon un ordre prédéfini et à des instants d'émission respectifs présentant des écarts temporels prédéfinis entre eux, à la précision de la synchronisation temporelle près. Si l'on considère de signaux de diffusion de durée de l'ordre de la seconde, alors les écarts temporels peuvent être par exemple de l'ordre de quelques secondes à quelques dizaines de secondes.

Par exemple, et tel qu'illustré par la figure 4, les stations de base 31-1 à 31-7 émettent successivement des signaux de diffusion SD1 à SD7 à des instants d'émission respectifs T1 à T7 :
- l'instant d'émission T2 présente un écart temporel Δt1, supérieur à la durée du signal de diffusion SD1, par rapport à T1,
- l'instant d'émission T3 présente un écart temporel Δt2, supérieur à la durée du signal de diffusion SD2, par rapport à T2,
- l'instant d'émission T4 présente un écart temporel Δt3, supérieur à la durée du signal de diffusion SD3, par rapport à T3,
- l'instant d'émission T5 présente un écart temporel Δt4, supérieur à la durée du signal de diffusion SD4, par rapport à T4,
- l'instant d'émission T6 présente un écart temporel Δt5, supérieur à la durée du signal de diffusion SD5, par rapport à T5,
- l'instant d'émission T7 présente un écart temporel Δt6, supérieur à la durée du signal de diffusion SD6, par rapport à T6.

Le motif de multiplexage temporel est par exemple répété de manière récurrente. Il est à noter que le contenu des signaux de diffusion SD1 à SD7 peut varier d'un motif de multiplexage temporel à un autre, par contre l'ordre d'émission des signaux de diffusion par les stations de base 31-1 à 31-7 et les écarts temporels entre les instants d'émission desdits signaux de diffusion est le même d'un motif de multiplexage temporel à un autre.

Dans des modes préférés de mise en œuvre, le motif de multiplexage temporel, comportant les signaux de diffusion SD1 à SD7, est répété selon un motif de répétition prédéfini.

Par exemple, le motif de multiplexage temporel peut être répété de manière périodique avec une période de répétition ΔT prédéfinie.

Suivant un autre exemple, le motif de répétition du motif de multiplexage temporel peut consister à répéter ledit motif de multiplexage temporel à des instants prédéfinis, pouvant être indexés sur l'échelle de temps universel coordonné UTC. Par exemple, le motif de répétition du motif de multiplexage temporel peut consister à répéter ledit motif de multiplexage temporel, au cours d'une journée, à 04:00 UTC, 10:00 UTC, 16:00 UTC et 22:00 UTC. Le motif de répétition peut être lui-même répété tous les jours.

De préférence, la durée du motif de multiplexage temporel est au moins dix fois inférieure à la durée minimale entre deux répétitions dudit motif de multiplexage temporel, voire au moins cent fois inférieure. Ainsi, les émissions des signaux de diffusion SD1 à SD7 sont regroupées dans le temps. Par conséquent, si un terminal 20 sait approximativement quand au moins un signal de diffusion est susceptible d'être reçu, alors ledit terminal 20 peut facilement, tout en écoutant la bande fréquentielle du lien descendant sur une durée qui peut être assez courte (de l'ordre de la durée de quelques signaux de diffusion), détecter tous les signaux de diffusion émis par des stations de base 31 dans les zones de couverture desquelles se trouve ledit terminal 20. Entre deux motifs de multiplexage temporel, c'est-à-dire la plus grande partie du temps, le terminal 20 peut alors se mettre en mode veille sur le lien descendant.

Dans des modes préférés de mise en œuvre, les signaux de diffusion SD1 à SD7 comportent des identifiants permettant de distinguer lesdits signaux de diffusion au sein du motif de multiplexage temporel. Ainsi, un terminal 20 qui détecte un signal de diffusion peut déterminer, grâce à l'identifiant, le rang dudit signal de diffusion détecté dans le motif de multiplexage temporel. Les signaux de diffusion SD1 à SD7 peuvent également comporter des informations permettant de distinguer les motifs de multiplexage temporel au sein du motif de répétition, en particulier lorsque ceux-ci ne sont pas répétés de manière périodique.

Dans l'exemple illustré par la figure 3, les stations de base 31-1 à 31-7 sont réparties géographiquement de sorte à desservir une zone géographique ZG1. Afin de desservir une région géographique de grandes dimensions, il est possible de prévoir plusieurs groupes de N_{G} stations de base 31, qui desservent des zones géographiques respectives différentes qui sont réparties à l'intérieur de la région géographique considérée.

Le cas échéant, les stations de base 31 des différents groupes sont, dans des modes préférés de mise en œuvre, organisées en N_{G} ensembles respectifs différents de stations de base 31. Ainsi, les N_{G} stations de base 31 de chaque groupe appartiennent à des ensembles respectifs différents, désignés par BS1 à BS7 en considérant N_{G} égal à 7.

De préférence, les stations de base 31 d'un même ensemble sont synchronisées temporellement entre elles et émettent simultanément leurs signaux de diffusion, de préférence dans la même bande fréquentielle. Par conséquent, les stations de base 31 de l'ensemble BS1 émettent simultanément leurs signaux de diffusion, les stations de base 31 de l'ensemble BS2 émettent simultanément leurs signaux de diffusion, les stations de base 31 de l'ensemble BS3 émettent simultanément leurs signaux de diffusion, etc. Si l'on considère un motif de multiplexage temporel des signaux de diffusion, alors ledit motif de multiplexage temporel est répété simultanément dans toutes les zones géographiques. Les avantages décrits ci-avant au niveau d'une zone géographique sont alors étendus à une pluralité de zones géographiques.

La figure 5 représente schématiquement un exemple de répartition géographique de différents groupes de stations de base 31 desservant des zones géographiques ZG1 à ZG4 respectives différentes. Dans l'exemple illustré par la figure 5, les zones géographiques ZG1 à ZG4 sont représentées schématiquement comme ne présentant pas de recouvrement géographique entre elles. Rien n'exclut cependant d'avoir des zones géographiques adjacentes présentant un recouvrement géographique entre elles. En outre, dans cet exemple, les stations de base 31 d'ensembles différents sont organisées, dans chaque groupe, selon un même motif de répartition géographique, ce qui permet notamment d'assurer que des stations de base adjacentes dans la région géographique, mais qui appartiennent à des groupes différents, appartiennent nécessairement à des ensembles différents et n'émettent donc pas simultanément leurs signaux de diffusion.

Ainsi, dans une même région géographique, les stations de base 31 émettent de préférence toutes les signaux de diffusion dans une même bande fréquentielle, et lesdits signaux de diffusion sont en outre multiplexés temporellement au sein de chaque zone géographique. Avantageusement, les signaux de diffusion des différents groupes de stations de base 31 sont émis dans un même intervalle temporel. Par contre, d'une région géographique à une autre, il est possible d'utiliser une bande fréquentielle différente pour l'émission des signaux de diffusion, du fait par exemple que les contraintes réglementaires ne sont pas les mêmes. Le cas échéant, les signaux de diffusion de régions géographiques différentes sont de préférence multiplexés temporellement. En d'autres termes, les signaux de diffusion de chaque région géographique sont émis dans un même intervalle de temps, et des intervalles de temps différents, sans recouvrement entre eux, sont utilisés pour les différentes régions géographiques. Ainsi, d'une part, il n'est pas nécessaire pour un terminal 20 d'avoir à écouter simultanément plusieurs bandes fréquentielles différentes. D'autre part, la durée d'écoute peut éventuellement être diminuée. En effet, si un terminal 20 change de région géographique, il écoutera généralement le lien descendant sur l'intervalle de temps associé à la région géographique dans laquelle il se trouvait précédemment, et ne détectera pas de signal de diffusion. Toutefois, le terminal 20 ne manquera pas non plus les signaux de diffusion émis dans la région géographique dans laquelle il se trouve, puisqu'ils sont émis dans un autre intervalle de temps. Ainsi, l'écoute par le terminal 20 d'un intervalle de temps erroné, associé à la région géographique dans laquelle il se trouvait précédemment, ne retarde pas la détection des signaux de diffusion émis dans la région géographique dans laquelle il se trouve. En outre, si le terminal 20 connaît la répartition temporelle des intervalles de temps respectifs des différentes régions géographiques et les bandes fréquentielles qui leur sont associés, le terminal 20 pourra écouter, au cours des intervalles de temps suivants, les bandes fréquentielles associées respectivement auxdits intervalles de temps, et détecter plus rapidement les signaux de diffusion.

En outre, les intervalles de temps d'émission de signaux de diffusion des différentes régions géographiques sont de préférence regroupés temporellement, afin de limiter la durée d'écoute, par un terminal 20, du lien descendant pour plusieurs régions géographiques.

### B) Procédé de réception de signaux de diffusion

La figure 6 représente schématiquement les principales étapes d'un procédé 60 de réception, par un terminal 20, de signaux de diffusion émis par le réseau d'accès 30 conformément à ce qui a été décrit ci-avant.

Par exemple, chaque terminal 20 comporte un module de traitement (non représenté sur les figures), comportant un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé 60 de réception de signaux de diffusion. Dans une variante, le module de traitement comporte un ou des circuits logiques programmables, de type FPGA, PLD, etc., et/ou circuits intégrés spécialisés (ASIC) adaptés à mettre en œuvre tout ou partie desdites étapes du procédé 60 de réception de signaux de diffusion. Chaque terminal 20 comporte en outre des moyens de communication sans fil, considérés comme connus de l'homme de l'art, permettant audit terminal d'émettre des messages montants et de recevoir des messages descendants sous la forme de signaux radioélectriques.

En d'autres termes, chaque terminal 20 comporte un ensemble de moyens configurés de façon logicielle (produit programme d'ordinateur spécifique) et/ou matérielle (FPGA, PLD, ASIC, etc.) pour mettre en œuvre les différentes étapes du procédé 60 de réception de signaux de diffusion.

Tel qu'illustré par la figure 6, le procédé 60 de réception de signaux de diffusion par un terminal 20 comporte tout d'abord une étape 61 de synchronisation temporelle initiale dudit terminal 20 avec le réseau d'accès 30.

Comme pour les stations de base 31, la précision de la synchronisation temporelle entre le terminal 20 et le réseau d'accès 30 peut être relativement faible. Par exemple une précision de l'ordre de la seconde est considérée comme suffisante dans le contexte de l'invention.

La synchronisation temporelle initiale du terminal 20 avec le réseau d'accès 30 peut mettre en œuvre toute méthode connue de l'homme de l'art, et une méthode particulière ne constitue qu'une variante d'implémentation de l'invention. Par exemple, le terminal 20 peut se synchroniser initialement par une écoute prolongée du lien descendant, jusqu'à la détection d'au moins un signal de diffusion. Si les signaux de diffusion sont en outre émis selon un motif de multiplexage temporel prédéfini, alors le terminal 20 peut extraire l'identifiant du signal de diffusion détecté et en déduire le rang dudit signal de diffusion détecté au sein dudit motif de multiplexage temporel. Le terminal 20 peut alors estimer un instant théorique de début d'un motif de multiplexage temporel ultérieur, en fonction par exemple d'une connaissance a priori du motif de répétition et, le cas échéant, de l'information, extraite du signal de diffusion détecté, permettant de distinguer les motifs de multiplexage temporel au sein dudit motif de répétition.

Suivant un autre exemple, le terminal 20 peut se synchroniser initialement en émettant une requête au réseau d'accès 30. Le réseau d'accès 30 répond alors en émettant un message descendant à destination dudit terminal 20, qui comporte une information permettant à celui-ci de se synchroniser temporellement avec le réseau d'accès 30. Par exemple, cette information de synchronisation consiste en l'heure en échelle de temps universel coordonné UTC (si les instants d'émission des signaux de diffusion sont indexés sur l'échelle de temps universel coordonné), ou la durée d'attente jusqu'au début du prochain motif de multiplexage temporel, etc.

Le procédé 60 de réception de signaux de diffusion comporte ensuite, lorsqu'il est nécessaire de recevoir un signal de diffusion, une étape 62 d'estimation d'un instant théorique de début d'un motif de multiplexage temporel ultérieur, et une étape 63 de recherche de signaux de diffusion en fonction dudit instant théorique de début. De préférence, le terminal 20 est par défaut en mode veille sur le lien descendant, et se réveille peu de temps avant ledit instant théorique de début de motif de multiplexage temporel, pour écouter le lien descendant à partir dudit instant théorique de début.

Lorsqu'un signal de diffusion est détecté (référence 630 sur la figure 6), le procédé 60 de réception comporte des étapes de :
- 64 mesure de l'instant de réception du signal de diffusion détecté, qui correspond par exemple à l'heure de réception dudit signal de diffusion en échelle de temps universel coordonné UTC,
- 65 extraction de l'identifiant dudit signal de diffusion détecté,
- 66 recalage temporel du terminal 20 avec le réseau d'accès 30 en fonction de l'identifiant extrait, du motif de multiplexage temporel, de l'instant de réception mesuré et de l'instant théorique de début du motif de multiplexage temporel détecté.

Par exemple, à partir de l'identifiant extrait et de l'instant théorique de début du motif de multiplexage temporel, le terminal 20 peut déterminer l'instant de réception théorique du signal de diffusion détecté. L'écart temporel entre l'instant de réception mesuré et l'instant de réception théorique dudit signal détecté permet au terminal 20 de recaler son horloge interne sur celle du réseau d'accès 30.

Lorsqu'aucun signal de diffusion n'est détecté (référence 631 sur la figure 6), au cours de l'étape 63 de recherche, après avoir écouté le lien descendant pendant la durée d'un motif de multiplexage temporel, alors le procédé 60 de réception se poursuit par exemple en reprenant à l'étape 62 d'estimation d'un instant théorique de début d'un motif de multiplexage temporel ultérieur ou en reprenant à l'étape 61 de synchronisation temporelle initiale.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant un système de communication sans fil UNB. Rien n'exclut, suivant d'autres exemples, de considérer d'autres types de systèmes de communication sans fil, y compris pour lesquels le spectre fréquentiel instantané des signaux radioélectriques émis par les terminaux est de largeur supérieure à un kilohertz.

## Revendications

1. Procédé (50) d'émission de signaux de diffusion par des groupes de stations de base (31) d'un système (10) de communication sans fil, à destination de terminaux (20) dudit système de communication sans fil, chaque station de base (31) comportant une zone de couverture, les zones de couverture des stations de base d'un groupe étant réparties géographiquement de sorte à desservir une zone géographique, dans lequel :
- pour chaque groupe de stations de base : les signaux de diffusion sont de durée limitée et sont émis dans une même bande fréquentielle utilisée par toutes les stations de base dudit groupe, les stations de base (31) dudit groupe sont synchronisées temporellement entre elles et les signaux de diffusion de stations de base différentes dudit groupe sont multiplexés temporellement, **caractérisé en ce que** :
- le système (10) de communication sans fil comportant plusieurs régions géographiques comportant chacune plusieurs groupes de stations de base (31), les signaux de diffusion de régions géographiques différentes sont multiplexés temporellement.

2. Procédé (50) selon la revendication 1, dans lequel les stations de base (31) des différents groupes d'une région géographique sont organisées en une pluralité d'ensembles respectifs différents de stations de base, les stations de base (31) de chaque groupe appartenant à des ensembles respectifs différents, chaque ensemble comportant une pluralité de stations de base appartenant à des groupes respectifs différents desservant des zones géographiques respectives différentes, et dans lequel les stations de base d'un même ensemble émettent simultanément les signaux de diffusion.

3. Procédé (50) selon la revendication 2, dans lequel les stations de base sont réparties géographiquement de sorte que les stations de base adjacentes de groupes différents appartiennent à des ensembles différents.

4. Procédé (50) selon l'une des revendications précédentes, dans lequel les instants d'émission des signaux de diffusion sont des instants prédéfinis en échelle de temps universel coordonné UTC.

5. Procédé (50) selon l'une des revendications précédentes, dans lequel les signaux de diffusion émis par un groupe de stations de base présentent un recouvrement fréquentiel.

6. Procédé (50) selon l'une des revendications précédentes, dans lequel les zones de couverture de stations de base adjacentes d'un groupe présentent un recouvrement géographique.

7. Procédé (50) selon l'une des revendications précédentes, dans lequel les signaux de diffusion de régions géographiques différentes sont regroupés temporellement.

8. Procédé (50) selon l'une des revendications précédentes, dans lequel les signaux de diffusion des stations de base (31) d'un groupe sont émis selon un motif de multiplexage temporel prédéfini répété selon un motif de répétition prédéfini, et dans lequel les signaux de diffusion des stations de base (31) comportent des identifiants permettant de distinguer lesdits signaux de diffusion au sein du motif de multiplexage temporel.

9. Procédé (50) selon la revendication 8, dans lequel les signaux de diffusion comportent en outre des informations permettant de distinguer les motifs de multiplexage temporel au sein du motif de répétition.

10. Procédé (50) selon l'une des revendications 8 à 9, dans lequel la durée du motif de multiplexage temporel est au moins dix fois inférieure à la durée minimale entre deux répétitions du motif de multiplexage temporel.

11. Procédé (50) selon l'une des revendications précédentes, dans lequel les stations de base d'une région géographique utilisent une même bande fréquentielle pour émettre les signaux de diffusion, différente d'une bande fréquentielle utilisée par les stations de base d'une autre région géographique pour émettre les signaux de diffusion.

12. Procédé (50) selon l'une des revendications précédentes, dans lequel les signaux de diffusion de chaque région géographique sont émis dans un même intervalle de temps, et des intervalles de temps différents, sans recouvrement entre eux, sont utilisés pour les différentes régions géographiques.

13. Réseau d'accès (30) d'un système (10) de communication sans fil, comportant des stations de base (31) comportant des moyens configurés pour émettre des signaux de diffusion, à destination de terminaux (20), selon un procédé (50) d'émission selon l'une des revendications précédentes.

14. Réseau d'accès (30) selon la revendication 13, dans lequel tout ou partie des stations de base (31) sont de type semi-duplex.

## Patentansprüche

1. Verfahren (50) zum Senden von Rundfunksignalen durch Gruppen von Basisstationen (31) eines drahtlosen Kommunikationssystems (10) an Endgeräte (20) des drahtlosen Kommunikationssystems, wobei jede Basisstation (31) ein Abdeckungsgebiet umfasst, wobei die Abdeckungsgebiete der Basisstationen einer Gruppe geographisch verteilt sind, sodass sie ein geographisches Gebiet versorgen, wobei:
- bei jeder Basisstationsgruppe: die Rundfunksignale von begrenzter Dauer sind und in ein und demselben Frequenzband gesendet werden, das von allen den Basisstationen der Gruppe verwendet wird, wobei die Basisstationen (31) der Gruppe zeitlich miteinander synchronisiert sind und die Rundfunksignale von unterschiedlichen Basisstationen der Gruppe zeitgemultiplext werden, **dadurch gekennzeichnet, dass**:
- wenn das drahtlose Kommunikationssystem (10) mehrere geographische Regionen umfasst, die jede mehrere Basisstationsgruppen (31) umfassen, die Rundfunksignale von unterschiedlichen geographischen Regionen zeitgemultiplext werden.

2. Verfahren (50) nach Anspruch 1, wobei die Basisstationen (31) der unterschiedlichen Gruppen einer geographischen Region als eine Vielzahl von jeweiligen unterschiedlichen Basisstationssätzen organisiert sind, wobei die Basisstationen (31) jeder Gruppe zu jeweiligen unterschiedlichen Sätzen gehören, wobei jeder Satz eine Vielzahl von Basisstationen umfasst, die zu jeweiligen unterschiedlichen Gruppen gehören, die jeweilige unterschiedliche geographische Gebiete versorgen, und wobei die Basisstationen ein und desselben Satzes die Rundfunksignale gleichzeitig senden.

3. Verfahren (50) nach Anspruch 2, wobei die Basisstationen geographisch so verteilt sind, dass die benachbarten Basisstationen unterschiedlicher Gruppen zu unterschiedlichen Sätzen gehören.

4. Verfahren (50) nach einem der vorstehenden Ansprüche, wobei die Sendezeitpunkte der Rundfunksignale in der Skala der koordinierten Weltzeit UTC vordefinierte Zeitpunkte sind.

5. Verfahren (50) nach einem der vorstehenden Ansprüche, wobei die von einer Basisstationsgruppe gesendeten Rundfunksignale eine Frequenzüberlappung aufweisen.

6. Verfahren (50) nach einem der vorstehenden Ansprüche, wobei die Abdeckungsgebiete von benachbarten Basisstationen einer Gruppe eine geographische Überlappung aufweisen.

7. Verfahren (50) nach einem der vorstehenden Ansprüche, wobei die Rundfunksignale von unterschiedlichen geographischen Regionen zeitlich gruppiert sind.

8. Verfahren (50) nach einem der vorstehenden Ansprüche, wobei die Rundfunksignale der Basisstationen (31) einer Gruppe nach einem vordefinierten Zeitmultiplex-Muster gesendet werden, das nach einem vordefinierten Wiederholungsmuster wiederholt wird, und wobei die Rundfunksignale der Basisstationen (31) Identifikatoren umfassen, die es ermöglichen, die Rundfunksignale innerhalb des Zeitmultiple-Musters zu unterscheiden.

9. Verfahren (50) nach Anspruch 8, wobei die Rundfunksignale weiter Informationen umfassen, die es ermöglichen, die Zeitmultiplex-Muster innerhalb des Wiederholungsmusters zu unterscheiden.

10. Verfahren (50) nach einem der Ansprüche 8 bis 9, wobei die Dauer des Zeitmultiplex-Musters mindestens um das Zehnfache kleiner ist als die Mindestdauer zwischen zwei Wiederholungen des Zeitmultiplex-Musters.

11. Verfahren (50) nach einem der vorstehenden Ansprüche, wobei die Basisstationen einer geographischen Region ein und dasselbe Frequenzband verwenden, um die Rundfunksignale zu senden, das sich von einem Frequenzband, das von den Basisstationen einer anderen geographischen Region verwendet wird, um die Rundfunksignale zu senden, unterscheidet.

12. Verfahren (50) nach einem der vorstehenden Ansprüche, wobei die Rundfunksignale jeder geographischen Region in ein und demselben Zeitintervall gesendet werden, und für die unterschiedlichen geographischen Regionen unterschiedliche Zeitintervalle ohne Überdeckung untereinander verwendet werden.

13. Zugangsnetz (30) eines drahtlosen Kommunikationssystems (10), das Basisstationen (31) umfasst, die Mittel umfassen, welche dafür konfiguriert sind, Rundfunksignale an Endgeräte (20) gemäß einem Sendeverfahren (50) nach einem der vorstehenden Ansprüche zu senden.

14. Zugangsnetz (30) nach Anspruch 13, wobei alle oder ein Teil der Basisstationen (31) vom Halbduplex-Typ sind.

## Claims

1. Method (50) for the transmission of broadcast signals by groups of base stations (31) of a wireless communication system (10), to terminals (20) of said wireless communication system, each base station (31) including a coverage area, with the coverage areas of the base stations of a group being distributed geographically such as to serve a geographical area, wherein:
- for each group of base stations: the broadcast signals are of a limited duration and are transmitted in the same frequency band used by all of the base stations of said group, the base stations (31) of said group are time-synchronised in relation to one another and the broadcast signals from the different base stations of said group are time-multiplexed,
**characterised in that**:
- the wireless communication system (10) including several geographical regions each including several groups of base stations (31), the broadcast signals from different geographical regions are time-multiplexed.

2. Method (50) according to claim 1, wherein the base stations (31) of the different groups of a geographical region are organised into a plurality of different respective sets of base stations, the base stations (31) of each group belonging to different respective sets, each set including a plurality of base stations that belong to different respective groups serving different respective geographical areas, and wherein the base stations of the same set simultaneously transmit the broadcast signals.

3. Method (50) according to claim 2, wherein the base stations are distributed geographically in such a way that the adjacent base stations of different groups belong to different sets.

4. Method (50) according to one of the preceding claims, wherein the transmission times of the broadcast signals are predefined times on the Coordinated Universal Time (UTC) scale.

5. Method (50) according to one of the preceding claims, wherein the broadcast signals transmitted by a group of base stations have a frequency overlap.

6. Method (50) according to one of the preceding claims, wherein the coverage areas of adjacent base stations of a group have a geographical overlap.

7. Method (50) according to one of the preceding claims, wherein the broadcast signals from different geographical regions are grouped together temporally.

8. Method (50) according to one of the preceding claims, wherein the broadcast signals from the base stations (31) of a group are transmitted according to a predefined time-division multiplexing pattern that is repeated according to a predefined repetition pattern, and wherein the broadcast signals from the base stations (31) include identifiers that make it possible to distinguish said broadcast signals within the time-division multiplexing pattern.

9. Method (50) according to claim 8, wherein the broadcast signals further include information that makes it possible to distinguish the time-division multiplexing patterns within the repetition pattern.

10. Method (50) according to one of claims 8 to 9, wherein the duration of the time-division multiplexing is at least ten times less than the minimum duration between two repetitions of the time-division multiplexing pattern.

11. Method (50) according to one of the preceding claims, wherein the base stations of a geographical region use a same frequency band to transmit the broadcast signals, different from a frequency band used by the base stations of another geographical region to transmit the broadcast signals.

12. Method (50) according to one of the preceding claims, wherein the broadcast signals of each geographical region are transmitted in the same time interval, and different time intervals, without overlapping in relation to one another, are used for the different geographical regions.

13. Access network (30) of a wireless communication system (10), including base stations (31) including means configured to transmit broadcast signals, to terminals (20), according to a transmitting method (50) according to one of the preceding claims.

14. Access network (30) according to claim 13, wherein all or part of the base stations (31) are of the semi-duplex type.
